# EUROPÄISCHE PATENTANMELDUNG

(11) **EP 3 136 123 A1**
(43) Veröffentlichungstag der Anmeldung: **01.03.2017**
(21) Anmeldenummer: 16179727.9
(22) Anmeldetag: 15.07.2016
(51) Int. Cl.: G01S 7/40, G01S 13/87, G01S 13/93, G01S 13/86, G01S 13/02

(54) **VERFAHREN ZUR ZUORDNUNG VON VORGEGEBENEN EINBAUPOSITIONEN ZU AN DEN EINBAUPOSITIONEN IN EINEM KRAFTFAHRZEUG VERBAUTEN RADARSENSOREN**

(30) Priorität: 22.08.2015 DE 102015011020
(71) Anmelder: AUDI AG, 85045 Ingolstadt (DE)
(72) Erfinder: Khlifi, Rachid, 85748 Garching (DE)

(57) **Zusammenfassung**

Verfahren zur Zuordnung von vorgegebenen Einbaupositionen zu an den Einbaupositionen in einem Kraftfahrzeug (1) verbauten Radarsensoren (2a-2h) in einem Steuergerät (7), welche Radarsensoren (2a-2h) unterschiedliche Erfassungsbereiche (3) aufweisen, wobei während einer Zuordnungsfahrt entlang einer Zuordnungsstrecke (8, 20) durch eine Zuordnungsumgebung mit wenigstens einem an der Zuordnungsstrecke (8, 20) angeordneten Radarziel (9a, 9b, 21 a, 21 b), zu dem wenigstens eine Ortsinformation vorbekannt ist, Radardaten des wenigstens einen Radarziels (9a, 9b, 21 a, 21 b) mit den Radarsensoren (2a-2h) aufgenommen werden, wobei die Zuordnung der Radarsensoren (2a-2h) zu den Einbaupositionen durch Auswertung der Radardaten wenigstens im Hinblick auf die zeitliche Abfolge von Detektionen wenigstens eines des wenigstens einen Radarziels (9a, 9b, 21 a, 21 b) ermittelt wird.

## Beschreibung

Die Erfindung betrifft ein Verfahren zur Zuordnung von vorgegebenen Einbaupositionen zu an den Einbaupositionen in einem Kraftfahrzeug verbauten Radarsensoren in einem Steuergerät, welche Radarsensoren unterschiedliche Erfassungsbereiche aufweisen, sowie ein Kraftfahrzeug.

Die Verwendung von Radarsensoren in Kraftfahrzeugen ist im Stand der Technik bereits weitgehend bekannt. Radarsensoren werden heutzutage meist als Umfeldsensoren für einen mittleren und größeren Distanzbereich eingesetzt, um andere Verkehrsteilnehmer oder größere Objekte in Distanz, Winkel und Relativgeschwindigkeit bestimmen zu können. Derartige Radardaten können in Umfeldmodelle eingehen oder auch unmittelbar Fahrzeugsystemen zur Verfügung gestellt werden. Nutzen aus Radardaten ziehen im bekannten Stand der Technik beispielsweise Längsführungssysteme, wie ACC, oder auch Sicherheitssysteme.

Radarsensoren herkömmlicher Bauart weisen meist eine größere Ausdehnung auf und sind eher klobig, nachdem die Antennen sowie die unmittelbar an der Antenne benötigten Elektronikkomponenten, also das Radar-Frontend, in einem Gehäuse integriert sind. Hauptsächlich bilden die Elektronikkomponenten dabei den Radar-Transceiver, der eine Frequenzsteuerung (üblicherweise umfassend eine Phasenregelschleife - PLL), Mischeinrichtungen, einem Low Noise Amplifier (LNA) und dergleichen enthält, oft werden jedoch auch Steuermodule und digitale Signalverarbeitungskomponenten antennennah realisiert, beispielweise um bereits aufbereitete Sensordaten, beispielsweise Objektlisten, auf einen angeschlossenen Bus, beispielsweise einen CAN-Bus, geben zu können.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, klein-bauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Radarsensoren detektieren Objekte zunächst in ihrem eigenen Koordinatensystem, beispielsweise relativ zum Mittelpunkt ihrer Antennenanordnung. In Kraftfahrzeugen, insbesondere in Fahrerassistenzsystemen, werden Informationen zu Objekten jedoch relativ zum Kraftfahrzeug, also im Koordinatensystem des Kraftfahrzeugs, benötigt. Beispielsweise kann basierend auf Informationen zu mit den Radarsensoren detektierten Objekten eine Kollisionswahrscheinlichkeit ermittelt werden und/oder es können Maßnahmen, beispielsweise Warnungen, ausgelöst werden. Um die Information zu detektierten Objekten im Fahrzeugkoordinatensystem zu ermitteln, bedarf es einer Transformation zwischen dem Sensorkoordinatensystem und dem Fahrzeugkoordinatensystem, wofür mithin die relative Einbauposition des Radarsensors im Kraftfahrzeug bekannt sein muss. Dabei ist es im Stand der Technik bekannt, vordefinierte Einbaupositionen in dem Kraftfahrzeug, die meist schon bei dessen Auslegung bestimmt werden, zu verwenden, und die Einbauposition des Radarsensors im Kraftfahrzeug im Radarsensor zu kodieren, beispielsweise in der Software des Radarsensors.

Werden nun beispielsweise acht Radarsensoren für eine 360°-Umgebungserfassung verwendet, existieren acht unterschiedliche Einbaupositionen, so dass acht unterschiedliche Varianten des Radarsensors, insbesondere also Radarsensoren mit acht unterschiedlichen Software-Varianten, vorgesehen sein müssen. Diesen Radarsensoren werden jeweils unterschiedliche Teilnummern zugeordnet. Das Steuergerät, das die Radardaten der Radarsensoren zusammenführt, wertet die von den Radarsensoren gelieferte Information zur Einbauposition aus und kann mithin die Radardaten korrekt zuordnen, so dass es möglich ist, beispielsweise eine in dem Steuergerät abgelegte Transformation, die der entsprechenden Einbauposition zugeordnet ist, zu nutzen, um die Radardaten in das Fahrzeugkoordinatensystem zu transformieren.

Nachteilhafterweise ist jedoch die Steuerung und die Verwaltung von mehreren unterschiedlichen Radarsensoren, die insbesondere unterschiedliche Teilenummern aufweisen, aufwändig. Insbesondere ist eine höhere Genauigkeit beim Verbau und bei der Bereitstellung erforderlich, um einen Fehleinbau und dergleichen zu vermeiden.

Der Erfindung liegt daher die Aufgabe zugrunde, eine weitere Möglichkeit zur korrekten Zuordnung von Radarsensoren zu Einbaupositionen anzugeben, die ohne eine einbaupositionsspezifische Ausbildung von Radarsensoren auskommt.

Zur Lösung dieser Aufgabe ist bei einem Verfahren der eingangs genannten Art erfindungsgemäß vorgesehen, dass während einer Zuordnungsfahrt entlang einer Zuordnungsstrecke durch eine Zuordnungsumgebung mit wenigstens einem an der Zuordnungsstrecke angeordneten Radarziel, zu dem wenigstens eine Ortsinformation vorbekannt ist, Radardaten des wenigstens einen Radarziels mit den Radarsensoren aufgenommen werden, wobei die Zuordnung der Radarsensoren zu den Einbaupositionen durch Auswertung der Radardaten wenigstens im Hinblick auf die zeitliche Abfolge von Detektionen wenigstens eines des wenigstens einen Radarziels ermittelt wird.

Erfindungsgemäß wird mithin vorgeschlagen, an allen Einbaupositionen grundsätzlich identisch ausgebildete Radarsensoren zu verwenden, in denen mithin die Einbauposition noch nicht kodiert ist. Anhand der Bewegung des Kraftfahrzeugs relativ zu einem Radarziel, insbesondere bei einer Vorbeifahrt an dem Radarziel (wobei selbstverständlich auch die Fahrtrichtung bekannt ist) wird nun ausgenutzt, dass die Radarsensoren unterschiedliche Erfassungsbereiche aufweisen, insbesondere also genügend Abstand zueinander aufweisen, um aus der zeitlichen Abfolge der Detektion des Radarziels auf die Einbauposition des Radarsensors innerhalb des Kraftfahrzeugs schließen zu können. Weist beispielsweise ein Kraftfahrzeug auf einer seiner Seiten drei Radarsensoren auf, nämlich einen vorne, einen mittig und einen hinten, wird bei einer Vorwärtsfahrt an einem Radarziel vorbei zunächst der vordere Radarsensor das Radarziel erfassen, dann der mittlere Radarsensor und schließlich der hintere Radarsensor, woraus sich eine eindeutige Reihenfolge der Detektion, mithin eine definierte zeitliche Abfolge, ergibt, die genutzt werden kann, um die Einbauposition entsprechend zu bestimmen. Wie dargelegt werden wird, kann es sich auch anbieten, weitere in den Radardaten vorliegende Informationen, insbesondere zur Plausibilisierung, zu nutzen, um die Zuordnung zu einer Einbauposition noch verlässlicher zu gestalten.

Das erfindungsgemäße Verfahren bringt eine Vielzahl von Vorteilen mit sich. So können alle Radarsensoren grundsätzlich gleich ausgebildet sein, das bedeutet, es liegt insbesondere nur eine einzige Hardware- und Softwareteilenummer vor, nachdem jeder Radarsensor beliebig an einer Einbauposition verbaut werden kann. Die Handhabung mehrerer Teilenummern entfällt. Dies hat eine Reduzierung eines Aufwands in der Produktion genauso wie eine Reduzierung der Kosten der Radarsensoren zur Folge. Auch bei der Montage der Radarsensoren bei der Herstellung des Kraftfahrzeugs ist der Aufwand reduziert. Es wird also insbesondere die Zahl unterschiedlicher Radarsensorvarianten reduziert.

Durch die grundsätzlich gleiche Ausbildung der Radarsensoren ist das Risiko eines Falschverbaus deutlich reduziert. Auch ein mehrmaliges oder erneutes Flashen aller Radarsensoren ist nicht länger notwendig, da die Softwaremodule aller Radarsensoren identisch ausgebildet werden können. Der Testaufwand, insbesondere beim Herstellen der Radarsensoren, ist im Vergleich zur Verwendung unterschiedlich ausgebildeter Radarsensoren deutlich reduziert. Auch der Umfang und der Aufwand für den Freigabeprozess bzw. die Absicherung in der Entwicklung wird deutlich vermindert, nachdem nur noch eine Variante des Radarsensors existiert.

Das hier beschriebene Verfahren kann selbstverständlich nicht nur beim Ersteinbau der Radarsensoren verwendet werden, sondern auch immer dann, wenn mehrere Radarsensoren ausgetauscht werden. Dann ist es ebenso möglich, dass die Zuordnung der neuen Radarsensoren nach Durchführen der kurzen Zuordnungsfahrt bestimmt werden. In einer solchen Ausgestaltung ist es insbesondere vorteilhaft, wenn das Verfahren auch auf einer zuvor unbekannten Zuordnungsstrecke durchgeführt werden kann, worauf im Folgenden noch näher eingegangen werden wird.

Ist die Zuordnung der Radarsensoren zu Einbaupositionen im Steuergerät erst bekannt, können beispielsweise dort abgelegte Transformationsparameter, die jeweils einer Einbauposition zugeordnet sind, verwendet werden, um die Radardaten in ein Fahrzeugkoordinatensystem zu transformieren.

Insbesondere dann, wenn zu beiden Seiten des Kraftfahrzeugs jeweils mehrere Radarsensoren vorgesehen sind, ist es zweckmäßig, wenigstens zwei zu unterschiedlichen Seiten der Zuordnungsstrecke angeordnete, in Fahrtrichtung versetzte Radarziele zu verwenden, wobei eine die Seite der Zuordnungsstrecke, zu der das Radarziel angeordnet ist, beschreibende Ortsinformation ermittelt wird oder vorgegeben ist und die Ortsinformation bei der Ermittlung der Zuordnung berücksichtigt wird. Dies beruht auf der Überlegung, dass zwei vollständig symmetrisch angeordnete Radarziele, die auf unterschiedlichen Seiten des Kraftfahrzeugs vorgesehen sind, in den Radardaten der linken und der rechten Radarsensoren nicht unterscheidbar wären, so dass mithin eine Zuordnung der Radarsensoren zu einer Seite nicht möglich wäre, ohne dass eine interne Zusatzinformation vorläge. Ist jedoch vorbekannt, dass entlang der dann insbesondere auch vorgegebenen Zuordnungsstrecke zunächst auf der linken Seite ein Radarziel zu finden ist, dann auf der rechten Seite, lassen sich die Radarziele aufgrund der zeitlichen Abfolge zuordnen und auch die Rechts-Links-Entscheidung ist aufgrund der vorhandenen Ortsinformation denkbar. Möglich ist es jedoch auch, die Ortsinformation zu ermitteln, insbesondere auch aus den Radardaten. So ist es beispielsweise möglich, die Ortsinformation in das Radarziel selbst zu kodieren, beispielsweise, indem es eine bestimmte Anzahl einzelner Punkt-ziele enthält, einen bestimmten Abstand von der dann bevorzugt vorgegebenen Zuordnungsstrecke aufweist und dergleichen. In diesem Sinne können gemessene Abstands- und Winkelwerte der Radarsensoren in Kombination mit Vorwissen auch genutzt werden, um festzustellen, ob sich ein Radarziel auf der rechten oder der linken Seite des Kraftfahrzeugs befindet.

Wie bereits erwähnt kann es zweckmäßig sein, dass eine vorgegebene Strecke mit vorbekannt positionierten Radarzielen, die durch Streckendaten beschrieben wird, verwendet wird. Beispielsweise kann es sich dabei um eine vordefinierte, kurze Strecke handeln, die mit einer insbesondere ebenso vordefinierten, niedrigen Geschwindigkeit, beispielsweise im Bereich von 10 bis 20 km/h durchfahren wird. Entlang dieser Zuordnungsstrecke können beispielsweise links und rechts der Zuordnungsstrecke als eine Art "Randbebauung" jeweils wenigstens ein besonders einfach detektierbares Radarziel, beispielsweise ein Winkelreflektor, angeordnet werden. Somit existiert eine klare und deutliche Erwartungshaltung für die sich ergebenden Radardaten einzelner Radarsensoren, so dass die Zuordnung auf besonders einfache Art und Weise möglich ist.

So ist es beispielsweise bevorzugt denkbar, dass die Auswertung durch Vergleich der Radardaten und/oder daraus abgeleiteter Auswertungsdaten mit aufgrund der Streckendaten und/oder einer Vorabmessfahrt ermittelten Vergleichsdaten erfolgt, im einfachsten Fall ist es beispielsweise möglich, eine Art Mappingtabelle/Zuordnungstabelle innerhalb des Steuergeräts vorzusehen, indem die zeitliche Abfolge von (beispielsweise bei Winkelreflektoren einen Schwellwert für die Reflektionsstärke übersteigenden) Detektionen bestimmten Einbaupositionen zugeordnet ist. Derartige Vergleichsdaten können jedoch auch in genauerer Form vorliegen, beispielsweise indem ganze Detektionsverläufe, beispielsweise für den Abstand, den Winkel und/oder die Geschwindigkeit, abgelegt werden und in ihrem zeitlichen Verlauf, insbesondere dem relativen zeitlichen Verlauf, mit entsprechenden aufgenommenen Radardaten verglichen werden. Diese Vergleichsdaten können beispielsweise im Rahmen einer Vorabmessfahrt mit bereits zugeordneten Radarsensoren aufgenommen werden, zusätzlich oder alternativ ist es jedoch auch denkbar, beispielsweise in Form einer Simulation, Vergleichsdaten vorzuberechnen bzw. anderweitig vorab zu bestimmen. Vorteilhaft ist es im Kontext einer vorgegebenen, durch Streckendaten beschriebenen Zuordnungsstrecke auch, wenn wenigstens ein Teil der Radardaten zur weiteren Kalibrierung der Radarsensoren nach der Zuordnung zu einer Einbauposition verwendet wird. Nachdem die Geometrie und die Reflektionseigenschaften der Radarziele, besonders bevorzugt gemeinsam mit der exakt befahrenen Zuordnungsstrecke und der gefahrenen Geschwindigkeit während der Zuordnungsfahrt, bekannt ist, können diese bekannten Informationen mit den Radardaten korreliert werden, um die Radarsensoren auch weiter zu kalibrieren, beispielsweise hinsichtlich der Detektionsstärke bei zu durchstrahlenden Bauteilen des Kraftfahrzeugs, also verdeckt verbauten Radarsensoren, der Ausrichtung, des Erfassungsbereichs und dergleichen.

Alternativ ist es jedoch auch denkbar, dass eine unbekannte Zuordnungsstrecke verwendet wird. Dies ist insbesondere dann, beispielsweise auch auf einer normalen Straße, möglich, solange die Umgebung des Kraftfahrzeugs geeignete Radarziele aufweist, von denen Reflektionen in Richtung der Radarsensoren auftreten, beispielsweise Randbebauungsobjekte wie Leitplanken oder andere stehende Ziele. Besonders zweckmäßig ist eine solche Vorgehensweise bei mehreren, beispielsweise auf einer Seite des Kraftfahrzeugs ausgetauschten Radarsensoren, da sich dann anhand der zeitlichen Abfolge deren Einbauposition bereits ergeben kann. Insbesondere jedoch, wenn zu einer eindeutigen Zuordnung Hintergrundwissen über die Seite des Kraftfahrzeugs, zu der das Radarziel angeordnet ist, erforderlich ist, sieht eine zweckmäßige Weiterbildung der vorliegenden Erfindung vor, dass die die Seite der Zuordnungsstrecke, zu der ein Radarziel angeordnet ist, beschreibende Ortsinformation zu wenigstens einem Teil der detektierten Radarziele unter Berücksichtigung der Sensordaten wenigstens eines weiteren Umgebungssensors des Kraftfahrzeugs, insbesondere einer Kamera, ermittelt und bei der Zuordnung berücksichtigt wird. In diesem Kontext können also weitere Umgebungssensoren des Kraftfahrzeugs, für die bereits die Einbauposition im Kraftfahrzeug bekannt ist, genutzt werden, um die benötigte Ortsinformation zur eindeutigen Zuordnung von insbesondere ausgetauschten Radarsensoren zu erhalten. Beispielsweise kann im Fall einer Kamera hier eine Bildverarbeitung vorgenommen werden, um besonders stark reflektierende Radarziele zu identifizieren und einer Seite des Kraftfahrzeugs zuzuordnen.

Es sei darauf hingewiesen, dass auch Ausgestaltungen denkbar sind, in denen seitens des Steuergeräts mehrere Anschlüsse für Radarsensoren existieren, deren Anzahl aber geringer ist als die der Radarsensoren. Ist nun bekannt, welche Einbaupositionen an welchen Anschluss angeschlossen werden, liegt eine Zusatzinformation vor, die eine Zuordnung von Radardaten zu einer Untergruppe von Einbaupositionen erlaubt. Diese kann es beispielsweise ermöglichen, wie bereits angedeutet wurde, auf eine Ortsinformation zur Seite eines Radarziels zu verzichten. Anders gesagt kann auch vorgesehen sein, dass die Zuordnung unter weiterer Berücksichtigung einer den Anschluss der Radarsensoren an das wenigstens zwei Anschlüsse für Radarsensoren aufweisende Steuergerät beschreibenden Zusatzinformation ermittelt wird.

Allgemein ist es im Rahmen der vorliegenden Erfindung zweckmäßig, wenn bei der Ermittlung der Zuordnung, insbesondere im Rahmen einer Plausibilisierung, auch wenigstens eine aus einem Abstandsverlauf und/oder einem Radialgeschwindigkeitsverlauf und/oder einem Winkelverlauf der Radardaten für das wenigstens eine Radarziel abgeleitete Zusatzinformation berücksichtigt wird. Betrachtet man beispielsweise wiederum das Beispiel von drei Radarsensoren zu einer Seite des Kraftfahrzeugs, wobei ein Radarsensor einen schräg, beispielsweise im 45°-Winkel, nach vorne gerichteten Erfassungsbereich, einer einen exakt zur Seite hin ausgerichteten Erfassungsbereich und einer einen schräg nach hinten ausgerichteten Erfassungsbereich aufweist, ergeben sich charakteristische Verläufe von Abstand, Geschwindigkeit und Winkel, die für das Radarziel über die Zeit ermittelt werden. So erkennt beispielsweise der vordere Radarsensor bereits früh, also in einem hohen Abstand, das Radarziel, welches seinen Abstand mit der Zeit reduziert, welcher ein Minimum erreichen kann und dann gegebenenfalls wieder kurz ansteigt, bis der ja schräg ausgerichtete Erfassungsbereich verlassen wird. Bezüglich des mittleren Radarsensors mit dem gerade zur Seite ausgerichteten Erfassungsbereich wird ein im Wesentlichen symmetrischer Abstandsverlauf erwartet: der Abstand beginnt bei einem eher niedrigen Wert, sinkt dann auf ein Minimum und steigt wieder auf den maximal erfassbaren Wert an. Für den hinteren, schräg nach hinten ausgerichteten Radarsensor gilt das Umgekehrte wie für den vorderen, schräg nach vorne ausgerichteten Radarsensor, so dass eine Unterscheidung der Einbauposition mithin auch anhand dieser Verläufe erfolgen kann, die mithin bei der Ermittlung der Zuordnung berücksichtigt werden können. Ähnliche Betrachtungen lassen sich für den Winkelverlauf anstellen. Interessant ist auch die Betrachtung des Geschwindigkeitsverlaufs, nachdem ja nur die Radialkomponente der Geschwindigkeit, also die Radialgeschwindigkeit, tatsächlich detektiert werden kann, mithin beispielsweise der im genannten Beispiel mittlere Radarsensor einen symmetrischen Verlauf um eine Geschwindigkeit von Null detektieren dürfte, während die schräg ausgerichteten Erfassungsbereiche positive oder negative Mittelwerte bei konstanter Geschwindigkeit des Kraftfahrzeugs messen sollten. Insgesamt gesagt kann also vorgesehen sein, dass zur Unterscheidung von Einbaupositionen Minima der Abstände und/oder Mittelwerte der gemessenen Radialgeschwindigkeiten und/oder Symmetrieeigenschaften wenigstens eines Verlaufs für Radardaten unterschiedlicher Radarsensoren verglichen werden.

In einer zweckmäßigen Weiterbildung kann vorgesehen sein, dass die Radarsensoren wenigstens für die Zuordnungsfahrt so betrieben werden, dass ihre Erfassungsbereich nicht überlappen. Dies vereinfacht die Feststellung der zeitlichen Reihenfolge ersichtlich deutlich, da das Radarziel immer nur von einem einzigen Radarsensor tatsächlich erfasst werden kann.

Insbesondere dann, wenn dennoch überlappende Erfassungsbereiche gegeben sind und/oder die Radardaten über die zeitliche Abfolge der Detektion hinaus ausgewertet werden sollen, sei es zur Identifikation von Radarzielen, zur Ermittlung einer Ortsinformation und/oder zur Plausibilisierung der Zuordnung, ist es besonders zweckmäßig, wenn Radarsensoren, die auf Halbleitertechnologie, insbesondere CMOS-Technologie, basieren, verwendet werden. Derartige Radarsensoren liefern, insbesondere auch im Nahbereich, äußerst genaue Radardaten mit einem niedrigen Signal-zu-Rausch-Verhältnis und können auch, wie eingangs bereits dargelegt, eine hohe Abstandstrennfähigkeit aufweisen, um Radarziele äußerst genau zu lokalisieren und/oder zu identifizieren. Es kann mithin vorgesehen sein, dass die Radarsensoren einen Halbleiterchip, insbesondere CMOS-Chip, aufweisen, durch den ein Radartransceiver realisiert wird. Vorzugsweise wird durch den Radartransceiver auch eine Steuereinheit des Radarsensors und/oder eine digitale Signalverarbeitungskomponente (DSP) des Radarsensors realisiert, und/oder es können der Halbleiterchip und eine Antennenanordnung des Radarsensors ein Package bilden. Besonders zweckmäßig ist es, wenn die Radarsensoren zumindest während der Zuordnungsfahrt mit einer Frequenzbandbreite größer als 2 GHz, insbesondere von 4 GHz, betrieben werden, da bei größeren Frequenzbandbreiten, die bei Sensoren in Halbleitertechnologie möglich sind, eine bessere Abstandstrennfähigkeit gegeben ist.

Zweckmäßig ist es ferner, wenn zur Abdeckung der Umgebung des Kraftfahrzeugs in einem 360°-Winkelbereich angeordnete Radarsensoren verwendet werden, bevorzugt acht Radarsensoren. Dabei können beispielsweise jeweils drei Radarsensoren in den vorderen und hinteren Stoßfängern verbaut sein, während zwei weitere Radarsensoren seitlich in Türen des Kraftfahrzeugs hinter einem entsprechenden, in das Türblech eingearbeiteten radardurchlässigen Fenster verbaut sind. Dabei ist üblicherweise jeweils ein Radarsensor nach vorne und nach hinten ausgerichtet, zwei Radarsensoren messen schräg, beispielsweise in einem 45°-Winkel nach vorne, zwei weitere Radarsensoren entsprechend schräg nach hinten und zwei seitlich. Bevorzugt handelt es sich um Weitwinkel-Radarsensoren.

Wie bereits erläutert wurde, ist es besonders zweckmäßig, wenn, insbesondere bei einer vorgegebenen Zuordnungsstrecke mit vorbekannt positionierten Radarzielen, als wenigstens ein Radarziel ein Winkelreflektor verwendet wird. Derartige Winkelreflektoren zeigen sich als Punktquellen in den Radardaten, die äußerst stark reflektieren und somit von anderen Reflektionszentren unterschieden werden können, um mithin auch deutlich identifiziert zu werden.

Neben dem Verfahren betrifft die vorliegende Erfindung auch ein Kraftfahrzeug mit mehreren Radarsensoren und einem zur Durchführung des erfindungsgemäßen Verfahrens ausgebildeten Steuergeräts. Sämtliche Ausführungen bezüglich des erfindungsgemäßen Verfahrens lassen sich analog auf das erfindungsgemäße Kraftfahrzeug übertragen, mit welchem mithin ebenso die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs,
- Fig. 2A bis 2D: ein erfindungsgemäßes Kraftfahrzeug zu verschiedenen Zeitpunkten entlang einer Zuordnungsstrecke,
- Fig. 3: die zeitliche Abfolge von Detektionen für ein erstes Radarziel,
- Fig. 4: die zeitliche Abfolge von Detektionen für ein zweites Radarziel, und
- Fig. 5: eine Skizze zu einer Zuordnungsfahrt entlang einer unbekannten Zuordnungsstrecke.

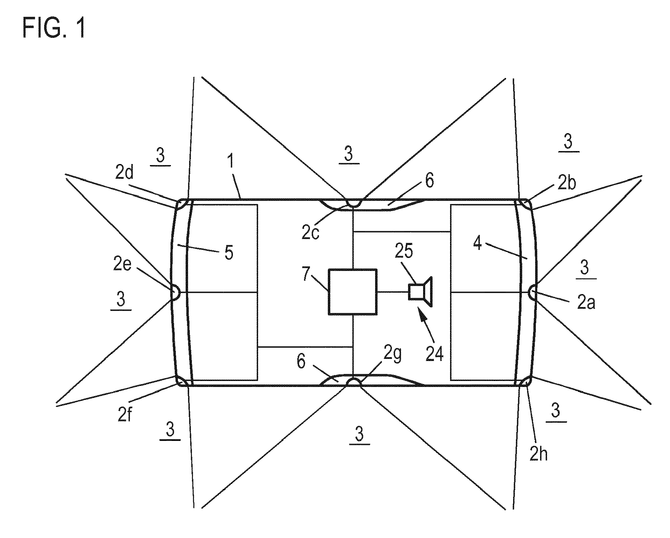

Fig. 1 zeigt eine Prinzipskizze eines erfindungsgemäßen Kraftfahrzeugs 1. Das Kraftahrzeug 1 weist vorliegend acht Radarsensoren 2a bis 2h auf, mit denen eine Überwachung der Umgebung des Kraftfahrzeugs 1 in einem 360°-Winkelbereich möglich ist, wobei die Erfassungsbereiche 3 der grundsätzlich als Weitwinkel-Radarsensoren ausgebildeten Radarsensoren 2a bis 2h vorliegend so gezeigt sind, wie sie während einer noch zu diskutierenden Zuordnungsfahrt verwendet werden, nämlich zumindest in einem für zu detektierende Radarziele relevanten Bereich nicht überlappend. Die drei auf das Vorfeld des Kraftfahrzeugs 1 gerichteten Radarsensoren 2a, 2b und 2h sind im vorderen Stoßfänger 4 des Kraftfahrzeugs 1 verdeckt verbaut, die rückwärtig ausgearbeiteten Radarsensoren 2c, 2e und 2f in einem hinteren Stoßfänger 5 des Kraftfahrzeugs 1. Die seitlich ausgerichteten Radarsensoren 2c und 2g sind hinter radardurchlässigen Fenstern in Türen 6 des Kraftfahrzeugs vorgesehen.

Die Radarsensoren 2a bis 2h liefern ihre Radardaten an das Steuergerät 7 des Kraftfahrzeugs 1, welches vorliegend als Steuergerät eines zentralen Fahrerassistenzsystems ausgebildet ist, das Sensordaten aller Umgebungssensoren des Kraftfahrzeugs zentral sammelt, insbesondere als ein Umgebungsmodell zusammenfasst und den insbesondere ebenso dort ausgeführten Funktionen mehrere Fahrerassistenzsysteme zur Verfügung stellt. Um die Radardaten der Radarsensoren 2a bis 2h in ein Fahrzeugkoordinatensystem umrechnen zu können, sind den verschiedenen Einbaupositionen, an denen die Radarsensoren 2a bis 2h vorgesehen sein können, jeweils zugeordnete Transformationen im Steuergerät 7 abgelegt. Damit diese Transformationen korrekt genutzt werden können, muss im Steuergerät 7 bekannt sein, welcher Radarsensor 2a bis 2h an welcher Einbauposition verbaut ist.

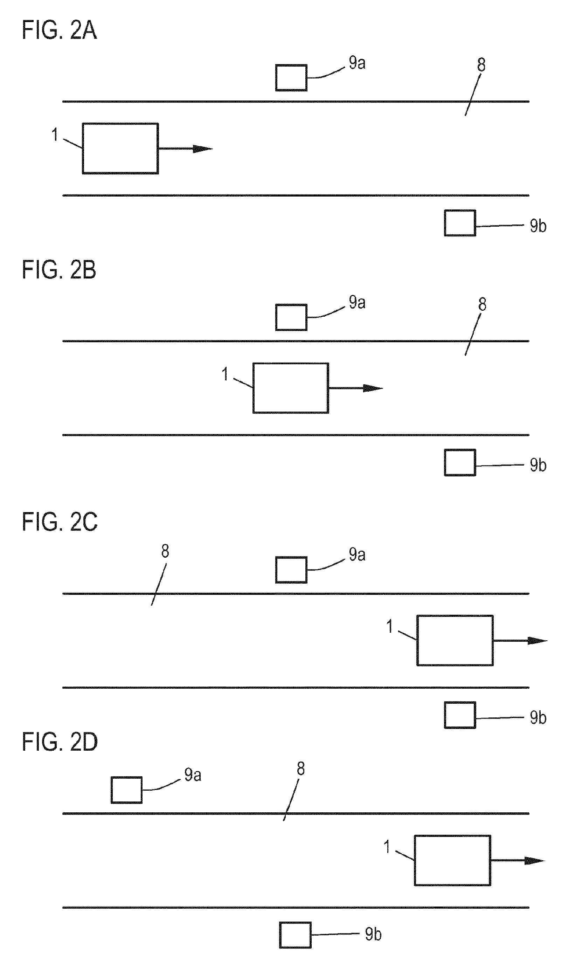

Um diese Zuordnung ermitteln zu können, ist vorliegend vorgesehen, dass das Kraftfahrzeug 1, wie durch die Fig. 2A bis 2D erläutert, eine vorgegebene Zuordnungsstrecke 8 mit einer vorliegend vorbestimmten Geschwindigkeit, beispielsweise 10 km/h, in einer bestimmten Richtung durchfährt. Entlang der Zuordnungsstrecke 8 sind hier zwei als Winkelreflektoren ausgebildete Radarziele 9a, 9b angeordnet, und zwar in Längsrichtung versetzt. Über die Ziele 9a und 9b sind vorab als Teil der Streckendaten, die die vorgegebene Zuordnungsstrecke 8 beschreiben, auch Ortsinformationen bekannt, insbesondere, auf welcher Seite sich das zuerst passierte Radarziel 9a befindet, sowie auf welcher Seite sich das zweite Radarziel 9b befindet. Vorliegend sind zusätzlich auch weitere Radarzielinformationen über deren Reflektionseigenschaften bekannt. Es sei angemerkt, dass die Ausgestaltung der Radarziele 9a, 9b auch so gewählt werden kann, dass die Seite, auf der sie sich befinden, in ihr Reflektionsverhalten kodiert ist. Derartiges kann vorliegend insbesondere deswegen in den Radardaten detektiert werden, nachdem die Radarsensoren 2a bis 2h auf Halbleitertechnologie basieren, vorliegend einen Halbleiter-Chip, konkret CMOS-Chip, aufweisen, der einen Radartransceiver, eine Steuereinheit und eine digitale Signalverarbeitungskomponente realisiert und gemeinsam mit einer Antennenanordnung des jeweiligen Radarsensors 2a, 2h als ein Package ausgebildet ist. Zur guten Abstandstrennfähigkeit werden die Radarsensoren 2a bis 2h mit einer Frequenzbandbreite von 4 GHz betrieben.

Es sei an dieser Stelle noch angemerkt, dass dann, wenn das Steuergerät 7 mehrere Anschlüsse für Radarsensoren 2a bis 2h aufweist und als Hintergrundinformation bekannt ist, welche Radarsensoren 2a bis 2h an welchen Einbaupositionen mit dem Steuergerät 7 verbunden sind, diese Zusatzinformation durchaus auch genutzt werden kann, um eine korrekte Zuordnung zu Einbaupositionen zu treffen, ohne dass es notwendig ist, a priori zu wissen, auf welcher Seite sich ein Radarziel 9a, 9b befindet. Nichtsdestotrotz soll vorliegend der allgemeine Fall beispielhaft betrachtet werden, in dem ohne Messung noch keine Aussage über die Einbauposition der Radardaten liefernden Radarsensoren 2a bis 2h getroffen werden kann.

Wie aus den Fig. 2a bis 2d ersichtlich ist, geraten die Radarziele 9a, 9b zeitlich nacheinander in die verschiedenen Erfassungsbereiche 3 der Radarsensoren 2a bis 2h. Während in der Situation der Fig. 2A zunächst nur das Radarziel 9a durch den Radarsensor 2a erfasst werden kann, wird in der Situation der Fig. 2B das Radarziel 9a durch den Radarsensor 2c und das Radarziel 9b bereits durch den Radarsensor 2a detektiert. In der Situation der Fig. 2C wird das Radarziel 9a bereits nur noch von dem Radarsensor 2e erfasst, während das Radarziel 9b vom Radarsensor 2g erfasst wird. In Fig. 2D schließlich hat das Kraftfahrzeug 1 das Durchfahren der Zuordnungsstrecke 8 fasst abgeschlossen, so dass lediglich das Radarziel 9b durch den Radarsensor 2e detektiert werden kann.

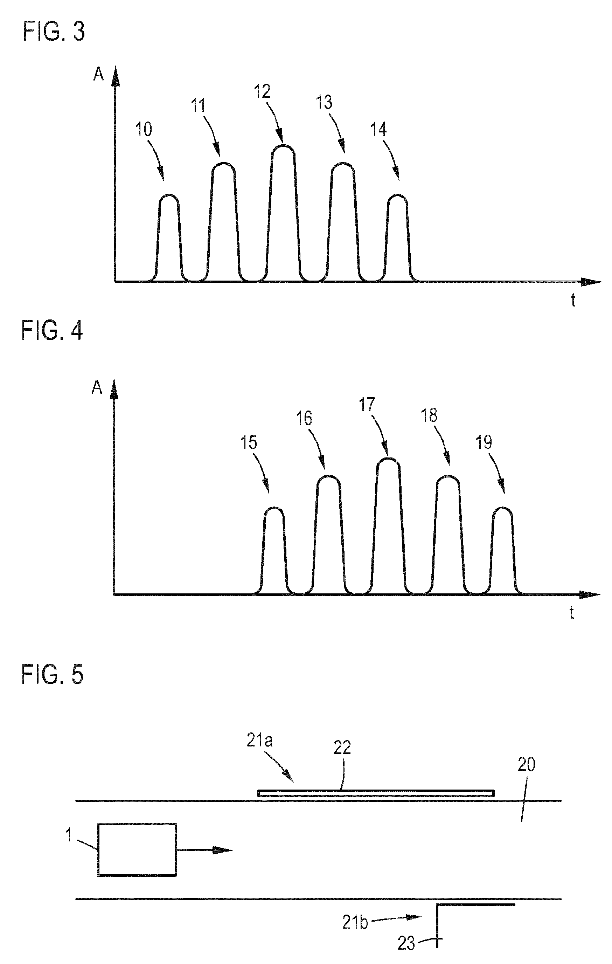

Dies äußert sich in einer bestimmten zeitlichen Abfolge der Detektionsereignisse, wobei die Radarziele 9a, 9b in den Radardaten leicht ausgemacht werden können, nachdem es sich um besonders stark reflektierende, als Punktquelle wirkende Winkelreflektoren handelt. Fig. 3 zeigt zeitlich aufeinander folgende Peaks 10, 11, 12, 13 und 14, die zunächst auftreten und sich auf das Radarziel 9a beziehen. Der Peak 10 kann entsprechend dem Radarsensor 2a zugeordnet werden, der das Ziel 9a als erstes detektiert. Nachdem das Kraftfahrzeug 1 mit gleichbleibender Geschwindigkeit an dem Radarziel 9a vorbeifährt, lässt sich der Peak 11 dem Radarsensor 2b, der Peak 12 dem Radarsensor 2c, der Peak 13 dem Radarsensor 2d und der Peak 14 dem Radarsensor 2e zuordnen.

Fig. 4 zeigt nun die entsprechenden, zeitlich etwas später zu verzeichnenden Peaks 15, 16, 17, 18 und 19, für die eine entsprechende Zuordnung erfolgen kann: der Peak 15 wird aufgrund seiner zeitlichen Position vom Radarsensor 2a aufgenommen, der Peak 16 vom Radarsensor 2h, der Peak 17 vom Radarsensor 2g, der Peak 18 vom Radarsensor 2f und der Peak 19 vom Radarsensor 2e.

Die zeitliche Abfolge, in der Radarziele 9a, 9b durch die Radarsensoren 2a bis 2h detektiert werden ermöglicht mithin, vorliegend mit Kenntnis der Seite des Radarziels 9a, 9b, eine eindeutige Zuordnung der Radarsensoren 2a bis 2h zu Einbaupositionen, wie leicht ersichtlich ist. Diese Zuordnungen können durch Auswertung der Abstandsverläufe, Winkelverläufe und Radialgeschwindigkeitsverläufe in den Radardaten seitens des Steuergeräts 7 noch weiter plausibilisiert werden. Hierfür können, nachdem die Zuordnungsstrecke 8 vorbekannt ist, vorliegend sogar die Geschwindigkeit vordefiniert ist, mit der die Zuordnungsfahrt durchgeführt wird, Vergleichsdaten im Steuergerät 7 abgelegt sein, die eine besonders einfache Zuordnung erlauben, nachdem die erwarteten Muster in den Radardaten der Radarsensoren 2a bis 2h vorbekannt sind, sich mithin aus den Streckendaten ergeben oder aus einer Vorabmessfahrt bei zugeordneten Radarsensoren 2a bis 2h in einem anderen Kraftfahrzeug 1 ermittelt werden können.

Das Steuergerät 7 nutzt die Radardaten der ja auch hochauflösend messenden Radarsensoren 2a bis 2h vorliegend auch, um weitere Kalibrierungsparameter für die Radarsensoren 2a bis 2h zu ermitteln, nachdem die vorbekannten Radarziele 9a, 9b ja nicht nur aufgrund ihrer Ortsinformationen, sondern auch aufgrund weiterer Radarzielinformationen genau bekannt sind.

Es sei angemerkt, dass, beispielsweise nach einem Austausch mehrerer der Radarsensoren 2a bis 2h, das beschriebene Zuordnungsverfahren seitens des Steuergeräts 7 auch entlang einer unbekannten Zuordnungsstrecke 20 erfolgen kann, solange diese geeignete, hinreichend stark reflektierende Radarziele 21 a, 21 b aufweist, vorliegend eine Leitplanke 22 und ein Randbebauungsobjekt 23. Eine seitliche Zuordnung, falls diese nicht, wie bereits angedeutet, durch die Zusatzinformation aufgrund des Anschlusses der Radarsensoren 2a bis 2h an das Steuergerät 7 gegeben ist, kann in einem solchen Fall mittels eines weiteren Umgebungssensors 24, hier einer Kamera 25 (vgl. Fig. 1) ermittelt werden.

## Patentansprüche

1. Verfahren zur Zuordnung von vorgegebenen Einbaupositionen zu an den Einbaupositionen in einem Kraftfahrzeug (1) verbauten Radarsensoren (2a-2h) in einem Steuergerät (7), welche Radarsensoren (2a-2h) unterschiedliche Erfassungsbereiche (3) aufweisen,
**dadurch gekennzeichnet,**
**dass** während einer Zuordnungsfahrt entlang einer Zuordnungsstrecke (8, 20) durch eine Zuordnungsumgebung mit wenigstens einem an der Zuordnungsstrecke (8, 20) angeordneten Radarziel (9a, 9b, 21 a, 21 b), zu dem wenigstens eine Ortsinformation vorbekannt ist, Radardaten des wenigstens einen Radarziels (9a, 9b, 21 a, 21 b) mit den Radarsensoren (2a-2h) aufgenommen werden, wobei die Zuordnung der Radarsensoren (2a-2h) zu den Einbaupositionen durch Auswertung der Radardaten wenigstens im Hinblick auf die zeitliche Abfolge von Detektionen wenigstens eines des wenigstens einen Radarziels (9a, 9b, 21 a, 21 b) ermittelt wird,
wobei wenigstens zwei zu unterschiedlichen Seiten der Zuordnungsstrecke (8, 20) angeordnete, in Fahrtrichtung versetzte Radarziele (9a, 9b, 21 a, 21 b) verwendet werden, wobei eine die Seite der Zuordnungsstrecke (8, 20), zu der das Radarziel (9a, 9b, 21 a, 21 b) angeordnet ist, beschreibende Ortsinformation ermittelt wird oder vorgegeben ist und die Ortsinformation bei der Ermittlung der Zuordnung berücksichtigt wird.

2. Verfahren nach Anspruch 1,
**dadurch gekennzeichnet,**
**dass** eine vorgegebene Zuordnungsstrecke (8) mit vorbekannt positionierten Radarzielen (9a, 9b), die durch Streckendaten beschrieben wird, verwendet wird.

3. Verfahren nach Anspruch 2,
**dadurch gekennzeichnet,**
**dass** die Auswertung durch Vergleich der Radardaten oder daraus abgeleiteter Auswertungsdaten mit aufgrund der Streckendaten und/oder einer Vorabmessfahrt ermittelten Vergleichsdaten erfolgt und/oder wenigstens ein Teil der Radardaten zur weiteren Kalibrierung der Radarsensoren (2a-2h) nach der Zuordnung zu einer Einbauposition verwendet wird.

4. Verfahren nach Anspruch 1,
**dadurch gekennzeichnet,**
**dass** eine unbekannte Zuordnungsstrecke (20) verwendet wird.

5. Verfahren nach Anspruch 4,
**dadurch gekennzeichnet,**
**dass** die die Seite der Zuordnungsstrecke (8, 20), zu der ein Radarziel (21a, 21b) angeordnet ist, beschreibende Ortsinformation zu wenigstens einem Teil der detektierten Radarziele (21 a, 21 b) unter Berücksichtigung der Sensordaten wenigstens eines weiteren Umgebungssensors (24) des Kraftfahrzeugs (1), insbesondere einer Kamera (25), ermittelt und bei der Ermittlung der Zuordnung berücksichtigt wird.

6. Verfahren nach einem der vorangehenden Ansprüche,
**dadurch gekennzeichnet,**
**dass** die Zuordnung unter weiterer Berücksichtigung einer den Anschluss der Radarsensoren (2a-2h) an das wenigstens zwei Anschlüsse für Radarsensoren (2a-2h) aufweisende Steuergerät (7) beschreibenden Zusatzinformation erfolgt.

7. Verfahren nach einem der vorangehenden Ansprüche,
**dadurch gekennzeichnet,**
**dass** bei der Ermittlung der Zuordnung, insbesondere im Rahmen einer Plausibilisierung, auch wenigstens eine aus einem Abstandsverlauf und/oder einem Radialgeschwindigkeitsverlauf und/oder einem Winkelverlauf der Radardaten für das wenigstens eine Radarziel (9a, 9b, 21 a, 21 b) abgeleitete Zusatzinformation berücksichtigt wird.

8. Verfahren nach Anspruch 7,
**dadurch gekennzeichnet,**
**dass** zur Unterscheidung von Einbaupositionen Minima der Abstände und/oder Mittelwerte der gemessenen Radialgeschwindigkeiten und/oder Symmetrieeigenschaften wenigstens eines Verlaufes für Radardaten unterschiedlicher Radarsensoren (2a-2h) verglichen werden.

9. Verfahren nach einem der vorangehenden Ansprüche,
**dadurch gekennzeichnet,**
**dass** die Radarsensoren (2a-2h) wenigstens für die Zuordnungsfahrt so betrieben werden, dass ihre Erfassungsbereiche (3) nicht überlappen.

10. Verfahren nach einem der vorangehenden Ansprüche,
**dadurch gekennzeichnet,**
**dass** die Radarsensoren (2a-2h) einen Halbleiterchip, insbesondere CMOS-Chip, aufweisen, durch den ein Radartransceiver realisiert wird.

11. Verfahren nach Anspruch 10,
**dadurch gekennzeichnet,**
**dass** die Radarsensoren (2a-2h) zumindest während der Zuordnungsfahrt mit einer Frequenzbandbreite größer als 2 GHz, insbesondere von 4 GHz, betrieben werden.

12. Verfahren nach einem der vorangehenden Ansprüche,
**dadurch gekennzeichnet,**
**dass** zur Abdeckung der Umgebung des Kraftfahrzeugs (1) in einem 360°-Winkelbereich angeordnete Radarsensoren (2a-2h) verwendet werden, bevorzugt acht Radarsensoren (2a-2h).

13. Verfahren nach einem der vorangehenden Ansprüche,
**dadurch gekennzeichnet,**
**dass** als wenigstens ein Radarziel (9a, 9b) ein Winkelreflektor verwendet wird.

14. Kraftfahrzeug (1), umfassend mehrere Radarsensoren (2a-2h) und ein zur Durchführung eines Verfahrens nach einem der Ansprüche 1 bis 12 ausgebildetes Steuergerät (7).
